# EUROPÄISCHE PATENTANMELDUNG

(11) **EP 2 441 969 A1**
(43) Veröffentlichungstag der Anmeldung: **18.04.2012**
(21) Anmeldenummer: 11008195.7
(22) Anmeldetag: 11.10.2011
(51) Int. Cl.: F16B 12/30, F16B 12/40, F16B 12/42, F16B 7/18, F16B 7/22

(54) **Lösbare Verbindung zwischen einem Hohlprofil und einem weiteren Teil**

(30) Priorität: 12.10.2010 AT 16922010
(71) Anmelder: Marchhart GmbH, 7201 Neudörfl (AT)
(72) Erfinder: Preissegger, Günter, 7033 Pöttsching (AT)

(57) **Zusammenfassung**

Die Erfindung betrifft eine lösbare Verbindung zwischen einem Hohlprofil (1) und einem weiteren Teil (2), welcher an der Stirnseite des Hohlprofils anliegt, wobei im Inneren des Hohlprofils (1) ein Einsatzteil (3) angeordnet und starr gehalten ist, wobei ein Gewindebolzen (4) am Einsatzteil (3) drehbar gelagert gehalten ist, vom Einsatzteil (3) aus auf den zu verbindenden Teil (2) zu ragt und über eine Gewindeverbindung mit dem Teil (2) zu verbinden, der mit dem Hohlprofil (1) zu verbindenden ist.

Der Gewindebolzen (4) ist über ein Winkelgetriebe mit einem am Einsatzteil (3) geführt beweglichen Antriebsteil (5) in Verbindung.

## Beschreibung

Die Erfindung betrifft eine lösbare Verbindung zwischen einem Hohlprofil und einem weiteren Teil, welcher an der Stirnseite des Hohlprofils anliegt. Ein wichtiger Anwendungsfall ist die Bildung von optisch schönen Rahmen oder Gestellen für Möbel, insbesondere von Tischgestellen.

Die Schriften EP 733322 B1, DE 8908536 U1, EP 1563764 A1, EP 1698253 A1, EP 1832201 A1, WO 2009056935 A1 zeigen längeneinstellbare Möbelfüße, wobei zwecks Längeneinstellbarkeit ein Gewindebolzen in einer Gewindehülse in Gewindeeingriff ist, wobei der Gewindebolzen gegenüber dem Mutterngewindeteil mittels eines Schraubendrehers drehbar ist, der nicht koaxial mit der Achse des Gewindebolzens angeordnet sein muss, sondern über ein sehr einfaches Winkelgetriebe auf den Gewindebolzen wirkt. Das einfache Winkelgetriebe ist dabei typischerweise gebildet indem der Gewindebolzen mit einem Ende in einem feststehenden Teil drehbar gelagert ist, wobei die Stirnseite dieses Endes des Gewindebolzens eine Verzahnung aufweist, die mit der Verzahnung eines durch einen Schraubendreher antreibbaren Zahnrades in Gewindeeingriff ist oder auch direkt mit dem eine Verzahnung darstellenden Ende eines Kreuz-Schraubendrehers in Eingriff bringbar ist. Indem der Schraubendreher nicht koaxial zur Gewindeachse des Gewindebolzens ausgerichtet werden muss, werden Platzprobleme vermieden.

Gemäß der AT 414 031 B wird eine lösbare T-Verbindung zwischen zwei aufeinander stoßenden Profilen, von denen das endende Profil ein Hohlprofil ist, hergestellt, indem vom durchgehenden Profil aus ein damit durch Schweißen verbundener Fortsatz in das endende Hohlprofil stirnseitig eingesteckt wird und darin durch einen Bolzen fixiert wird, welcher sowohl durch eine Bohrung im Fortsatz als auch in der Mantelfläche des endenden Profils verläuft. Der Bolzen ist als Exzenterteil ausgebildet, durch Drehung um eine seiner beiden parallel zueinander liegenden Längsachsen wird der Fortsatz in das Hohlprofil hineingezogen.

Die beschriebene Verbindung ist fest, steif und komfortabel montier- und demontierbar. Nachteilig ist, dass zumindest an einem der beiden miteinander zu verbindenden Profile ein Teil angeschweißt werden muss. Dieses Schweißen bedeutet einen teuren zusätzlichen Arbeitsgang. Bei vielen Anwendungen, beispielsweise im Möbelbau, können Schweißnähte auch optisch stören. Dass die Verbindung von der passenden Einstellung eines Excenters abhängt, wird mancherorts als nachteilig empfunden.

Die der Erfindung zugrunde liegende Aufgabe besteht darin, eine lösbare Verbindung zwischen einem Hohlprofil und einem weiteren Teil zu bilden, wobei der weitere Teil an der Stirnseite des Hohlprofils anliegt. Die Verbindung soll einfach und rasch montier- und demontierbar sein, sie soll keine über die Mantelfläche des Hohlprofils vorstehenden Teile aufweisen müssen und es soll nicht erforderlich sein an dem Hohlprofil oder an dem damit zu verbindenden Teil zu schweißen.

Zum Lösen der Aufgabe wird eine Verbindung entsprechend der folgenden Merkmalskombination vorgeschlagen:
- Im Inneren des Hohlprofils ist ein Einsatzteil angeordnet und starr gehalten.
- Ein Gewindebolzen ist am Einsatzteil drehbar gelagert gehalten.
- Der Gewindeteil des Gewindebolzens ragt parallel zu Profilrichtung aus dem Einsatzteil hervor auf die Stirnseite des Hohlprofils zu.
- Der Gewindebolzen ist über eine Gewindeverbindung mit dem Teil zu verbinden, welcher mit dem Hohlprofil zu verbindenden ist.
- Der Gewindebolzen ist über ein Winkelgetriebe zu Drehbewegung um seine Gewindeachse antreibbar, wobei der die Drehbewegung des Gewindebolzens antreibende Teil am Einsatzteil geführt gehalten ist.

Indem der Gewindebolzen über ein Winkelgetriebe antreibbar ist, kann das Antriebsmoment über eine Antriebswelle (typischerweise einen Schraubendreher) aufgebracht werden, welche durch eine Öffnung einer Mantelfläche des Hohlprofils oder durch die Öffnungsfläche einer Profilnut des Hohlprofils verläuft. Damit sind guter Arbeitskomfort und kleine Einbaumaße erreichbar und es brauchen nach der Montage keine Teile vorzustehen.

Ein bevorzugtes Ausführungsbeispiel der Erfindung wird in einer Zeichnung veranschaulicht:

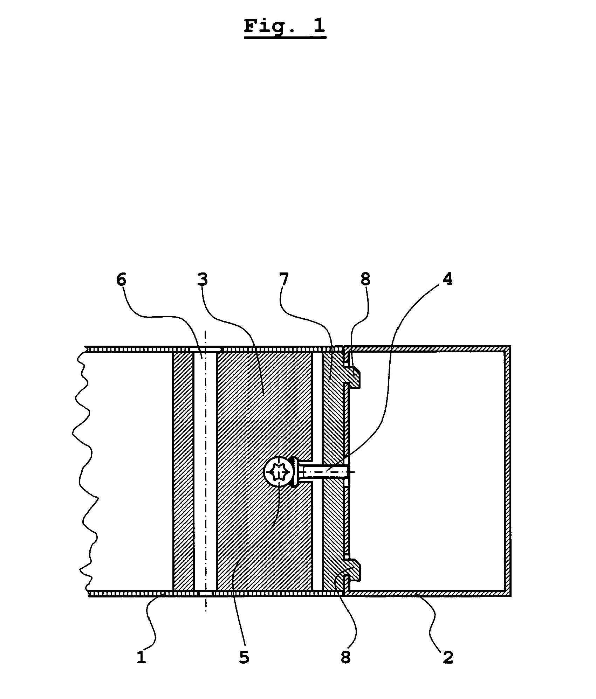

Fig. 1: zeigt eine beispielhafte erfindungsgemäße Verbindung in seitlicher Teilschnittansicht.

Gemäß Fig. 1 ist das Hohlprofil 1 erfindungsgemäß mit einem weiteren Teil 2, welcher in diesem Beispiel ebenfalls ein Hohlprofil ist, verbunden.

In den Hohlraum des Hohlprofils 1 ist ein Einsatzteil 3 eingesteckt und darin durch einen Bolzen 6, welcher durch eine Bohrung in gegenüberliegenden Mantelflächen des Hohlprofils 1 und des Einsatzteils verläuft, gegen Relativbewegung zum Hohlprofil 1 in dessen Längsrichtung gesichert. Gegen Relativbewegung in andere Richtungen ist der Einsatzteil 3 gesichert, indem er mit seiner Außenkontur an der Innenkontur des Hohlprofils 1 anliegt.

Im Einsatzteil 3 ist ein Gewindebolzen 4 drehbar gelagert gehalten. Der Gewindeteil des Gewindebolzens 4 ragt parallel zu Profilrichtung des Hohlprofils 1 aus dem Einsatzteil 3 hervor auf die Stirnseite des Hohlprofils 1 zu. Der Gewindebolzen ist mit einer Mutterngewindebohrung an einem Zwischenteil 7, welcher ebenfalls im Hohlprofil 1 angeordnet ist, in Gewindeverbindung. Der Zwischenteil 7 ist durch Hakenfortsätze 8 an Ausnehmungen des mit dem Hohlprofil 1 zu verbindenden Teils 2 verhakt.

Der Zwischenteil 7 ist an der der Stirnseite des Hohlprofils 1 zugewandten Seite des Einsatzteils 3 in einem kleinen Abstand zu diesem angeordnet. Indem der Gewindebolzen 4 in das Mutterngewinde am Zwischenteil 4 eingeschraubt wird, werden Zwischenteil 4 und Einsatzteil 3 über den Gewindebolzen 4 aneinander gezogen und damit auch das Hohlprofil 1 mit dem damit zu verbindenden Teil 2.

Von erfindungsgemäßer Bedeutung ist, dass Drehung des Gewindebolzens 4 um seine Gewindeachse hervorgerufen werden kann, indem ein Antriebsteil 5 um eine zur Gewindeachse des Gewindebolzens 4 verschiedene Drehachse drehbar ist und indem zwischen diesem Antriebsteil 5 und dem Gewindebolzen 4 ein Winkelgetriebe wirkt, welches Drehbewegung des Antriebsteils 5 in Drehbewegung des Gewindebolzens 4 um dessen Gewindeachse übersetzt.

Im Sinne dieser Beschreibung ist mit "Winkelgetriebe" ganz allgemein ein Getriebe gemeint, welches Drehbewegung eines Teils in eine Drehbewegung eines anderen Teils übersetzt, wobei die Drehachsen der beiden Teile in einem von 0° verschiedenen Winkel zueinander ausgerichtet sind.

Im dargestellten Beispiel ist das Winkelgetriebe realisiert, indem ein Ende des Gewindebolzens 4 mit einer Kegelradverzahnung ausgebildet ist und indem der Antriebsteil 5 ebenso mit einer damit in Eingriff befindlichen Kegelradverzahnung ausgebildet ist und ebenso am Einsatzteil 3 drehbar gelagert gehalten ist. Für den Antrieb des Antriebsteils 5 ist dieser mit einer Vertiefung für den Eingriff eines Schraubendrehers ausgestattet.

Eine andere gut verwendbare Form eines Winkelgetriebes ist beispielsweise die Kombination einer Stirnverzahnung an Gewindebolzen oder Antriebsteil mit einer Umfangsverzahnung an Antriebsteil oder Gewindebolzen. Ebenso gut verwendbar ist die Kombination einer Umfangsverzahnung am Gewindebolzen mit einem als Gewindeschnecke ausgebildeten Antreibsteil.

In einer besonders einfachen Ausführungsform ist die Spitze eines Kreuzschraubendrehers schon direkt der Antriebsteil, welcher nach Art einer Kegelradverzahnung mit einer Verzahnung am Gewindebolzen in Eingriff gebraucht wird, indem der Schraubendreher in eine Vertiefung am Einsatzteil eingesteckt und damit passend gehalten und geführt wird.

Dass der Gewindebolzen 4 nicht direkt mit einem Mutterngewinde in dem zu befestigenden Teil 2 in Gewindeeingriff ist, sondern mit einem Zwischenteil 7, der über mehrere Hakenfortsätze 8 mit dem zu verbindenden Teil 2 verbunden ist, hat mehrere wichtige Vorteile:
- Insbesondere dann, wenn Teil 2 relativ groß und/oder ortsfest ist, wird der Montagevorgang von Hohlprofil 1 und Teil 2 aneinander rascher und einfacher durchführbar. Der Vorteil ist schon sehr erheblich, wenn beide Teile 1, 2 Hohlprofile sind, aus denen ein Tischrahmen zusammengesetzt wird.
- Die Wandstärke von Teil 2 kann dünner ausgeführt sein, da sie kein Mutterngewinde aufzuweisen braucht welches vom Gewindebolzen 4 auszuübende Zugkraft aufnehmen muss.
- Die Zugkraft eines Gewindebolzens 4 kann durch mehrere Haken 8 des Zwischenteils 7 auf solche Bereiche des Teils 2 übertragen werden, welche voneinander möglichst weit entfernt liegen und nahe an den am Teil 2 anliegenden Stirnflächenbereichen des Hohlprofils 1 liegen. Damit wird die Verbindung zwischen Hohlprofil 1 und Teil 2 sehr gut stabil gegen Biegebelastungen.

Im Sinne dieser Beschreibung sind mit dem Begriff "Hohlprofil" Profile bezeichnet, welche zumindest zwei einander gegenüberliegende Wände aufweisen, zwischen denen ein Teil, wie der Einsatzteil 3 einklemmbar ist. In diesem Sinn sind also nicht nur solche Profile als Hohlprofile zu verstehen, deren Profilfläche eine in sich geschlossene Innenkontur aufweist, sondern beispielsweise auch U-Profile.

## Patentansprüche

1. Lösbare Verbindung zwischen einem Hohlprofil (1) und einem weiteren Teil (2), welcher an der Stirnseite des Hohlprofils anliegt, wobei im Inneren des Hohlprofils (1) ein Einsatzteil (3) angeordnet und starr gehalten ist, wobei ein Gewindebolzen (4) am Einsatzteil (3) drehbar gelagert gehalten ist, vom Einsatzteil (3) aus auf den zu verbindenden Teil (2) zu ragt und über eine Gewindeverbindung mit dem Teil (2) zu verbindenden ist, der mit dem Hohlprofil (1) zu verbindenden ist, **dadurch gekennzeichnet, dass** der Gewindebolzen (4) über ein Winkelgetriebe mit einem am Einsatzteil (3) geführt beweglichen Antriebsteil (5) in Verbindung ist und durch Drehbewegung des Antriebsteils (5) zu Drehbewegung um seine Gewindeachse antreibbar ist.

2. Verbindung nach Anspruch 1, **dadurch gekennzeichnet, dass** der Gewindebolzen (4) mit einem Zwischenteil (7) in Gewindeeingriff steht und dass der Zwischenteil (7) mehrere Hakenfortsätze (8) aufweist, mittels derer er mit dem mit dem Hohlprofil (1) zu verbindenden Teil (2) verhakbar ist.

3. Verbindung nach Anspruch 1 oder Anspruch 2, **dadurch gekennzeichnet, dass** damit Profilteile eines Möbelrahmens verbunden sind.

4. Verbindung nach Anspruch 3, **dadurch gekennzeichnet, dass** damit Profilteile eines Tischrahmens verbunden sind.
